# EUROPEAN PATENT SPECIFICATION

(11) **EP 3 192 357 B1**
(45) Date of publication and mention of the grant of the patent: **26.09.2018**
(21) Application number: 17000041.8
(22) Date of filing: 11.01.2017
(51) Int. Cl.: A01K 1/02, A01K 15/02, B64D 1/02

(54) **REMOTE-CONTROLLED OBJECT RELEASE MECHANISM WITH A FASTENING STRAP**
FERNGESTEUERTER OBJEKTAUSLÖSEMECHANISMUS MIT EINEM BEFESTIGUNGSBAND
MÉCANISME TÉLÉCOMMANDÉ DE LIBÉRATION D'OBJET AYANT UNE SANGLE DE FIXATION

(30) Priority: 12.01.2016 HU 1600021
(43) Date of publication of application: 19.07.2017
(73) Proprietor: Sebö, Gyula, 2310 Szigetszentmiklós (HU)
(72) Inventor: Sebö, Gyula, 2310 Szigetszentmiklós (HU)

(56) References cited:
- DE-U1-202013 007 488
- US-A1- 2006 213 455
- US-A1- 2011 253 571
- US-A1- 2015 041 593
- US-B1- 9 174 733

## Description

The patent relates to a remote-controlled object release mechanism with a fastening strap for fastening animate and inanimate target objects to unmanned aerial vehicles, landmarks, human or animal clothing for the deployment of service dogs, and for the reward-based training of dolphins or working and hunting dogs. The target object is fastened to a support plate, on a target object resting area with at least one fastening strap, which can be released by remote-control or manually, operated based on the principle of electromagnetism.

The tasks of unmanned aerial vehicles, remote-controlled model aircraft, helicopters, and now drones include the transportation and release of target objects.

During the reward-based training of dolphins, a dolphin working at a long distance from the trainer could receive a treat (fish, object) from the air. For the examples mentioned above only an appropriate fastening method needs to be found, which can be made accessible to even ordinary drone or model aircraft owners. The release of objects is safe for an aerial vehicle only if no lateral forces act on the aerial vehicle, diverting it from the direction of flight.

The transportation of live animals by unmanned aerial vehicles, and their remote-controlled release at a safe height provides new opportunities for special search and rescue activities.

The research of Brazilian-born inventor Miguel Nicolelis has demonstrated, for example, that the brain of rats is capable of exceptional performance.

Not to mention their survival skills, which in this respect far exceed the opportunities offered by any animal in the service of man.

The deployment of trained rats on disaster areas in the search for living and dead people, food and water, for example, is a realistic aim. Sensors attached to rats allow the determination of the nature and extent of any chemical contamination on the surface or in the deeper layers of the soil, or under collapsed buildings that can be fatal to the members of rescue teams.

In such situations their transportation by unmanned aerial vehicles could be justified. In order to ensure their accurate targeting, low-flying, well-manoeuvrable aerial vehicles could be deployed.

When service dogs are deployed for rescue and military purposes, there is a need for the dog moving away from its handler to wear objects (IR tracking light, transceiver, etc.) fastened to its harness or clothing that can be released by remote-control.

In the field of dog training, during the performance of a task it is necessary that the dog takes possession of a cynological target object that can preferably withstand the bite of the dog without permanent deformation as a reward, motivational object, while the trainer himself is far away from the dog, or if the target object is attached to him, to his clothing as an intermediate material, in such a way that his upper body remains motionless at the moment of releasing the target object. When rewarding the dog, it is preferable if the reward is not accompanied by any incidental body movement. If there is nothing to tell a working dog that a reward is coming, then it will clearly associate the reward or, where appropriate, the target object with the successful performance of the particular task. The maximum attention of the animal to be trained or tested can be attracted to the dog handler wearing the target object, the landmark holding the target object, and the performance of any related task. Preferably, the target object is released by remote-control at the desired moment, indicating to the dog the successful performance of the task. The target object is a device comprising a bite portion and typically a handle, designed so as not to damage the teeth of the dog.

In the training of working dogs retrieval training (a target object grabbed, carried, retrieved by the dog) is essential. Numerous dog sports are known in which the task of the dog is to climb obstacles, and possibly to carry or retrieve objects. With a remote-controlled cynological device mountable on the structure of various stairs and tunnels, for example, the skills of search dogs can be developed in a playful manner. The more varied the shape, weight of the object to be fastened and released by remote-control, the more successful the training. The varied shape object is fastened preferably by means of an elastic fastening strap and a support plate. In the training of hunting dogs, for example, the fastening of target objects imitating shot small game on landmarks, and giving them to the dog as a reward by remote-control is a highly preferred aim. For decades, tens of thousands of assistance, rescue, therapy and hunting dogs have been and are trained worldwide successfully by means of various objects. In most cases, especially in the early stages of the training, it is crucial that the target object gets into motion at the desired moment, attracting the attention of the dog. The release of any target object from an aerial vehicle or landmark results in independent behaviour by the dog, without control by a leash or other device.
The prior art includes several inventions for dogs comprising a bite portion and a handle. (US 2010/0147228 A1) This patent discloses a motivational object for dogs, which comprises an at least partially elastic bite body having an internal cavity, and a clamping element, which allows for its attachment to the clothing of the dog handler in a releasable manner.
In the prior art there are numerous cynological target objects (hollow balls, fillable bite tugs) that can be attached for example to the clothing of the dog handler in a releasable manner, such as e.g. DE202013007488. A solution known in the prior art is disclosed in utility model No. DE20200500 7412, a Ball dispensing device for dog training, which comprises at least one rigid wall that can be mounted in the pocket of the vest of the trainer, and two open sides. The device is suitable for storing, hiding a dog toy, primarily a ball. The lower opening of the ball dispensing device is closed by an openable bottom plate. Thus the development comprises a ball-shaped bite portion withstanding the bite of the dog, and a holding device attachable to the clothing of the dog handler. The bottom plate is opened in a mechanical way, by pulling a cord, and the ball falls from the holding device due to gravity. The bottom plate is closed by a magnet.
The disadvantage of the device is that the ball dispenser can be used only in the field of dog training, and within that only on the clothing of the dog handler. The rewarding of the dog is done in a mechanical way, with a hand movement and noise perceivable by the dog. This is disadvantageous from the point of view of training, furthermore the use of the holding device is quite complicated. It can be used only in a pocket made especially for this purpose. It cannot be used on different parts of the body. It cannot be operated on other landmarks or aerial vehicles, even if the bottom plate is opened by remote-control. The device can only be mounted vertically. These factors limit its usability. In the holding device the target object is not prevented from displacement while running, the target object is not fixed. After the mechanical opening of the bottom plate only a target object with a diameter and a shape smaller than that of the holding device, and of a material not sticking to the inner wall of the holding device is capable of sliding out.
The closest solution in the prior art in terms of functionality is disclosed in patent No. WO2013123944A1.
The device is a drone, primarily for the purpose of rescuing people from water, by flying over the person in trouble and dropping a life vest.
The life vest is fastened inside the drone in a compact state.
The disadvantage of the development is that the fastening of the target object only allows the fastening of objects that fit into the holding chamber of the drone.
The holding chamber cannot be added later, or cannot be mounted on another aerial vehicle, furthermore it cannot be used on other landmarks, or on human or animal clothing.

US9174733 also discloses a payload release device.

The general aim of this development is, using a mechanism according to claim 1, to fasten a target object to at least one support plate by means of multiple magnets, electromagnets and an elastic fastening strap, and to release it by remote-control. The aim is to improve the fastening of the target object, so that for fastening it the target object is not required to have a holding portion and/or no magnet needs to be placed in it, and the target object is not required to have a part made of iron either. The fastening shall be suitable for holding a living creature, e.g. a rat which is preferably fastened to the floor plate of the device, unmanned aerial vehicle. The aim is to provide a fastening strap solution allowing the fastening of a target object having a width several times that of the support plate. The aim is the ensure firm attachment to human or dog clothing, when there is an intermediate material (e.g. the clothing of the dog handler) between the support plate fixed magnet and the support plate magnet counter-piece. The option of installing a cable for manual control allowing manual operation in the event of the failure of the remote controller needs to be provided. The fastening strap is elastic, preferably containing rubber threads, in order to rest flat on the object to ensure the safe fastening of the target object irrespective of the diameter thereof.

The patent relates to a remote-controlled object release mechanism according to claim 1 with a fastening strap for the electromagnetically controlled fastening of animate and inanimate target objects to, and their release from unmanned aerial vehicles, landmarks and human or animal clothing.

The essence of the development using a mechanism according to claim 1, is that the target object is fastened to a support plate, on a target object resting area limited by an electromagnet fixed to the support plate and a support plate fixed magnet fixed to the support plate, covered at least in part over the target object resting area by an elastic fastening strap connecting an electromagnet flapping counter-piece that connects to the electromagnet and a support plate magnet counter-piece that connects to the support plate fixed magnet, furthermore the path of the movement of the electromagnet flapping counter-piece upon the release of the target object is limited by the fastening strap in such a way that the electromagnet flapping counter-piece closes on the support plate magnet counter-piece.
In a preferred embodiment of the remote-controlled object release mechanism with a fastening strap according to claim 1, the support plate is a rigid plate.

In the most preferred embodiment the electromagnet flapping counter-piece and the support plate magnet counter-piece of the remote-controlled object release mechanism with a fastening strap according to claim 1 have a form-fitting cover, which is connected to the fastening strap by sewing, and the form-fitting cover has an opening tab.
Preferably, at least an electromagnet edging strip and/or a fixed magnet edging strip protrudes from the support plate of the remote-controlled object release mechanism with a fastening strap according to claim 1 in the direction of the target object resting area.

In the most preferred embodiment the electromagnet edging strip of the remote-controlled object release mechanism with a fastening strap according to claim 1 at least partially surrounds the electromagnet flapping counter-piece, and the fixed magnet edging strip at least partially surrounds the support plate magnet counter-piece.

There are support plate mounting openings in the over-extending parts of the support plate of the remote-controlled object release mechanism with a fastening strap according to claim 1.

The target object of the remote-controlled object release mechanism with a fastening strap according to claim 1 is preferably a barrel- or rod-shaped flexible device.

There is a multi-functional slot on the box of the remote-controlled object release mechanism with a fastening strap according to claim 1, with a connection for manual control.

The electromagnet flapping counter-piece of the remote-controlled object release mechanism with a fastening strap according to claim 1 preferably has a lower holding force and weight than the support plate magnet counter-piece.

There is a multi-colour RGB LED on the box of the remote-controlled object release mechanism with a fastening strap according to claim 1.

The most preferred embodiment of the remote-controlled object release mechanism with a fastening strap according to claim 1 is shown in the following figures.
Figure 1 shows the support plate fixed magnet and the electromagnet located at the two ends of the target object resting area from the direction facing the resting area, and the box connected by wire.
Figure 2 shows the target object on the resting area, in a state fastened by the fastening strap.
Figure 3 shows a side view, the A-A cross section of the attachment of the support plate to an intermediate material, the fastening of the target object by the fastening strap and the structural elements of the fastening strap, and the electronics.
Figure 4 shows the fastening of a live rat equipped with search and tracking technical means to an unmanned aerial vehicle.

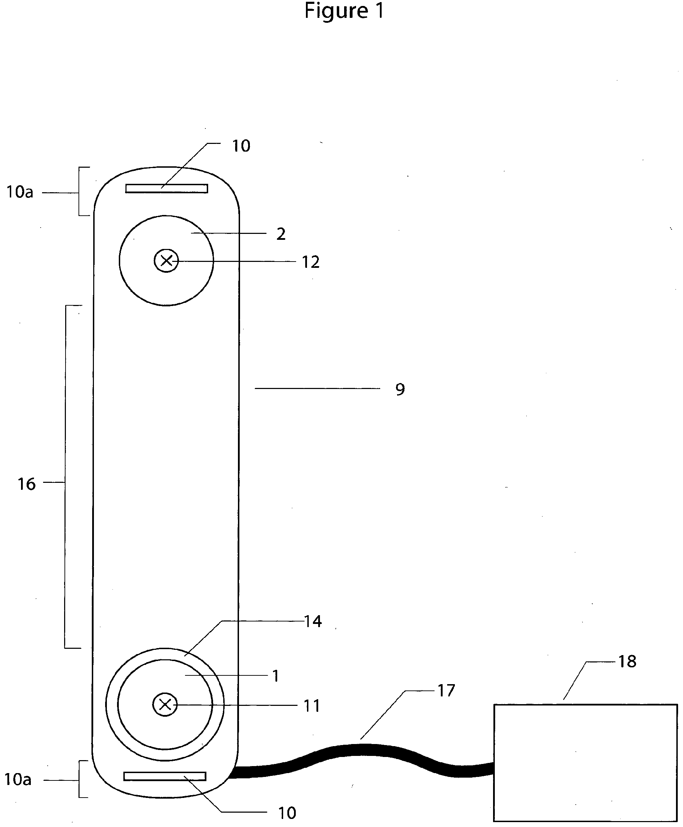

Figure 1 shows a top view of an electromagnet 1 located on a support plate 9 preferably made of a plastic plate, and a support plate fixed magnet 2 located at the opposite end of the support plate 9. The support plate fixed magnet 2 is fixed to the support plate 9 with a fixed magnet fixing screw 12, while the electromagnet 1 is fixed with an electromagnet fixing screw 11. The electromagnet 1 has an electromagnet edging strip 14 preferably made of plastic, at least partially surrounding it. The support plate 9 has support plate over-extending parts 10.a most preferably at both ends, in which there are support plate mounting openings 10. There is a target object resting area 16 between the electromagnet 1 and the support plate fixed magnet 2. A wire 17 is connected to the support plate 9, which ends in a box 18. The length of the target object resting area 16 is most preferably between 5 and 15 cm. The width of the target object resting area 16 is most preferably between 3 and 7 cm.

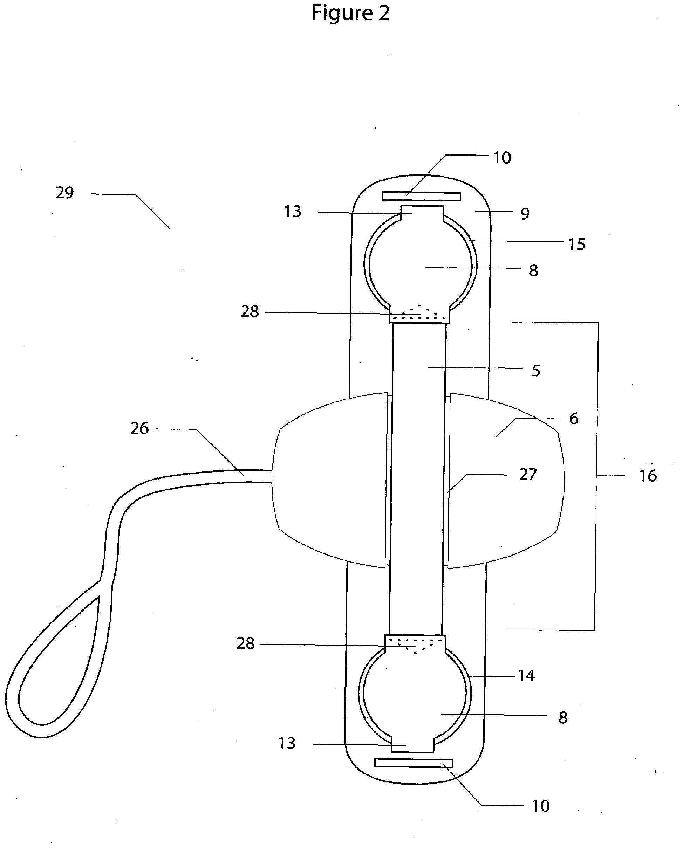

Figure 2 shows the remote-controlled object release mechanism with a fastening strap 29 in a state ready for operation. In a preferred embodiment a target object 6, made of a flexible material and having a target object handle 26, is fastened to the support plate 9 with a fastening strap 5 running in a guide recess 27. The guide recess 27 is a protrusion and/or groove on the surface of the target object 6. Both ends of the fastening strap 5 are connected to a form-fitting cover 8 at a connection point 28, most preferably by diagonal sewing. The form-fitting cover 8 is most preferably made of heat shrinkable plastic and has an opening tab 13. The form-fitting cover 8 only partially covers the electromagnet edging strip 14. The form-fitting cover 8 only partially covers the fixed magnet edging strip 15. The support plate 9 has at least one support plate mounting opening 10. The target object 6 only partially covers the target object resting area 16. The width of the target object 6 perpendicularly to the support plate 9 extends beyond the width of the support plate 9. The width of the target object 6 compared to the fastening strap 5 is most preferably 70 percent of the distance between the fixed magnet edging strip 15 and the electromagnet edging strip 14.

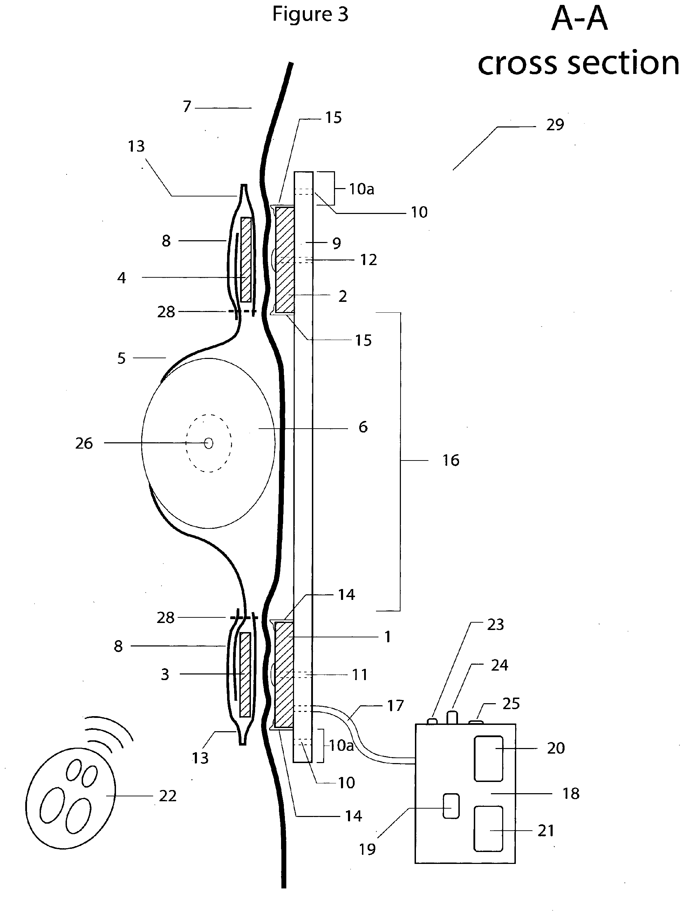

Figure 3 shows the A-A cross-section of the remote-controlled object release mechanism with a fastening strap 29 attached to an intermediate material 7 (human clothing, etc.).

If the support plate 9 is attached to an intermediate material 7, animal or human clothing on the principle of magnetism, then the intermediate material 7 is between the support plate fixed magnet 2 on one side, and the support plate magnet counter-piece 4 connected to it on the other side. The support plate magnet counter-piece 4 continues in the fastening strap 5, which fastening strap 5 ends in the electromagnet flapping counter-piece 3 that connects to the electromagnet 1. The fastening strap 5 is released as a result of a momentary reversal of polarity between the electromagnet 1 and the electromagnet flapping counter-piece 3. When operated, the electromagnet 1 drops the electromagnet flapping counter-piece 3 and it closes on the support plate magnet counter-piece 4 by moving in the direction determined by the fastening strap 5. The intermediate material 7 is pressed against the support plate fixed magnet 2 by the support plate magnet counter-piece 4 with at least such a force that it can hold the full weight of the remote-controlled target object release mechanism with a fastening strap 29 together with the target object 6. The electromagnet flapping counter-piece 3 is released by the electromagnet 1 by means of control electronics 19, operated by a remote controller 22 from a power source 21, and a capacitor 20 located in the box 18, through the wire 17. At the given moment magnetic attraction ceases between the electromagnet 1 and the electromagnet flapping counter-piece 3 connected to it and the electromagnet flapping counter-piece 3 closes on the support plate magnet counter-piece 4 in the direction limited and determined by the fastening strap 5, as a result of which the fastening strap 5 detaches from the target object 6 and due to gravity the target object 6 falls from the target object resting area 16, thereby motivating the dog. The electromagnet edging strip 14 and/or fixed magnet edging strip 15 breaks the line of the intermediate material 7 and provides a favourable resting surface for the target object 6, furthermore it prevents the slipping of the remote-controlled target object release mechanism with a fastening strap 29 on the intermediate material 7. In a preferred embodiment the electromagnet 1 is fixed to the support plate 9 with an electromagnet fixing screw 11. The electromagnet flapping counter-piece 3 is covered by a form-fitting cover 8 covering 100 percent thereof. The fastening strap 5 is led under the form-fitting cover 8. The fastening strap 5 is connected to the form-fitting cover 8 at a connection point 28 by sewing. The support plate fixed magnet 2 is fixed to the support plate 9 with a fixed magnet fixing screw 12 at the other end, opposite to the electromagnet 1, and the two limit the target object resting area 16 located between them. The support plate fixed magnet 2 has a fixed magnet edging strip 15, which extends beyond the support plate fixed magnet 2 in the direction of the support plate magnet counter-piece 4. The fixed magnet edging strip 15 surrounds the support plate magnet counter-piece 4 covered by a form-fitting cover 8. The fastening strap 5 is led under the form-fitting cover 8 covering the support plate magnet counter-piece 4 and they are connected at a connection point 28 by sewing. The form-fitting cover 8 ends in an opening tab 13, which is formed from an over-extending portion of the form-fitting cover 8. In the most preferred embodiment the target object resting area 16 is parallel to the fastening strap 5 at least as far as the support plate fixed magnet 2. The support plate 9 is most preferably made of dimensionally stable plastic, the hardness of which allows the fixing of the electromagnet fixing screw 11, without using the intermediate material 7. Support plate mounting openings 10 formed in the support plate over-extending parts 10.a allow the attachment of the support plate 9 to a landmark. The target object 6 is made of a flexible material and preferably has a target object handle 26. The box 18 is preferably equipped with a switch 24, a connection for manual control 25 and a standby indicator LED 23.

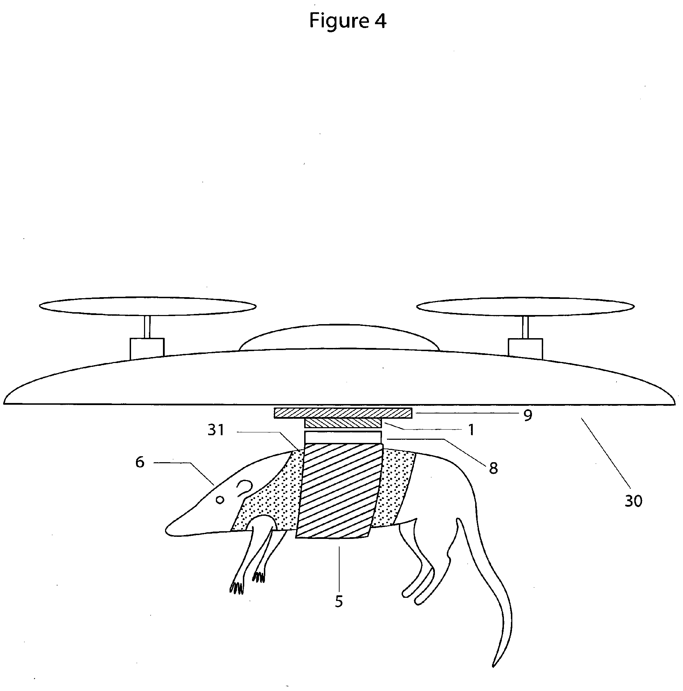

Figure 4 shows the fastening of a target object 6, in this case a live rat to an unmanned aerial vehicle 30, preferably a drone. The rat wears a clothing 31 suitable for attaching technical means (tracker, chemical analyser, etc.). The fastening strap 5 holding and at least partially covering the target object 6 is connected in a fix manner to the form-fitting cover 8 of the electromagnet flapping counter-piece 3 shown in the cross-sectional drawing in Figure 3. The form-fitting cover 8 is attached to the electromagnet 1 in a releasable manner. The electromagnet 1 is fixed to the support plate 9. The electromagnet 1 is fixed to the support plate 9, which support plate 9 is attached to an unmanned aerial vehicle 30. The fastening strap 5 is preferably an elastic textile strap. Upon release, the movement of the fastening strap 5 acts as a buoyant force on the unmanned aerial vehicle 30. The support plate 9 and the electronics shown in Figure 3, operating the electromagnet 1, can be preferably recessed into the bottom plate of the unmanned aerial vehicle 30.

The remote-controlled object release mechanism with a fastening strap according to claim 1 provides a solution for the fastening of animate and inanimate target objects to unmanned aerial vehicles, landmarks, human or animal clothing with an elastic fastening strap, for the deployment of service dogs, and for the reward-based training of dolphins or working and hunting dogs. Depending on the design of the fastening strap and the support plate, it is also suitable for the transportation of live animals.

### List of reference numbers

1. electromagnet
2. support plate fixed magnet
3. electromagnet flapping counter-piece
4. support plate magnet counter-piece
5. fastening strap
6. target object
7. intermediate material
8. form-fitting cover
9. support plate
10. support plate mounting opening
10.a support plate over-extending part
11. electromagnet fixing screw
12. fixed magnet fixing screw
13. opening tab
14. electromagnet edging strip
15. fixed magnet edging strip
16. target object resting area
17. wire
18. box
19. control electronics
20. capacitor
21. power supply
22. remote controller
23. LED
24. switch
25. connection for manual control
26. target object handle
27. guide recess
28. connection point
29. remote-controlled object release mechanism with a fastening strap
30. unmanned aerial vehicle
31. target object clothing

## Claims

1. Remote-controlled object release mechanism with a fastening strap for the electromagnetically controlled fastening of animate and inanimate target objects to, and their release from unmanned aerial vehicles, landmarks and human or animal clothing, **characterized in that** the target object (6) is fastened to a support plate (9), on a target object resting area (16) limited by an electromagnet (1) fixed to the support plate (9) and a support plate fixed magnet (2) fixed to the support plate (9), covered at least in part over the target object resting area (16) by an elastic fastening strap (5) connecting an electromagnet flapping counter-piece (3) that connects to the electromagnet (1) and a support plate magnet counter-piece (4) that connects to the support plate fixed magnet (2), furthermore the path of the movement of the electromagnet flapping counter-piece (3) upon the release of the target object (6) is limited by the fastening strap (5) in such a way that the electromagnet flapping counter-piece (3) closes on the support plate magnet counter-piece (4).

2. The remote-controlled object release mechanism with a fastening strap (29) according to claim 1, **characterized in that** the support plate (9) is a rigid plate.

3. The remote-controlled object release mechanism with a fastening strap (29) according to claims 1-2, **characterized in that** the electromagnet flapping counter-piece (3) and the support plate magnet counter-piece (4) have a form-fitting cover (8).

4. The remote-controlled object release mechanism with a fastening strap (29) according to claim 3, **characterized in that** the form-fitting cover (8) is connected to the fastening strap (5) by sewing.

5. The remote-controlled object release mechanism with a fastening strap (29) according to claims 3-4, **characterized in that** the form-fitting cover (8) has an opening tab (13).

6. The remote-controlled object release mechanism with a fastening strap (29) according to claims 1-5, **characterized in that** at least an electromagnet edging strip (14) and/or a fixed magnet edging strip (15) protrudes from the support plate (9) in the direction of the target object resting area (16).

7. The remote-controlled object release mechanism with a fastening strap (29) according to claim 6, **characterized in that** the electromagnet edging strip (14) at least partially surrounds the electromagnet flapping counter-piece (3).

8. The remote-controlled object release mechanism with a fastening strap (29) according to claims 6-7, **characterized in that** the fixed magnet edging strip (15) at least partially surrounds the support plate magnet counter-piece (4).

9. The remote-controlled object release mechanism with a fastening strap (29) according to claims 1-8, **characterized in that** there are support plate mounting openings (10) in support plate over-extending parts (10.a).

10. The remote-controlled object release mechanism with a fastening strap (29) according to claims 1-9, **characterized in that** the target object (6) is preferably a barrel- or rod-shaped flexible device.

11. The remote-controlled object release mechanism with a fastening strap (29) according to claims 1-10, **characterized i n** that there is a multi-functional slot on a box (18), with a connection for manual control (25).

12. The remote-controlled object release mechanism with a fastening strap (29) according to claims 1-11, **characterized in that** the electromagnet flapping counter-piece (3) preferably has a lower holding force and weight than the support plate magnet counter-piece (4).

13. The remote-controlled object release mechanism with a fastening strap (29) according to claim 11, **characterized in that** there is a multi-colour RGB LED (23) on the box (18).

## Patentansprüche

1. Ferngesteuerter Objektfreigabemechanismus mit einer Befestigungslasche zur elektromagnetisch gesteuerten Befestigung von belebten und unbelebten Zielobjekten zu unbemannten Flugkörpern, Landmarken und menschlicher oder tierischer Kleidung und zu ihrer Freisetzung davon, **dadurch gekennzeichnet, dass** das Zielobjekt (6) auf eine Trägerplatte (9) befestigt ist, auf einem Zielobjektauflagebereich (16), das durch einen Elektromagneten (1) begrenzt ist, der an der Trägerplatte (9) befestigt ist, und einen Trägerplattenfestmagneten (2), der an der Trägerplatte (9) befestigt ist, die zumindest teilweise über dem Zielobjektauflagebereich (16) durch ein elastisches Befestigungsband (5) bedeckt ist, das ein mit dem Elektromagneten (1) verbundenes Elektromagnetschlaggegenstück (3) und ein Trägerplattenmagnetgegenstück (4) verbindet, das mit dem Trägerplattenfestmagneten (2) verbunden ist, weiterhin ist der Bewegungsweg des Elektromagnetschlaggegenstücks (3) beim Lösen des Zielobjekts (6) durch das Befestigungsband (5) so begrenzt, dass das Elektromagnetschlaggegenstück (3) auf dem Trägerplattenmagnetgegenstück (4) schließt.

2. Ferngesteuerter Objektfreigabemechanismus mit einer Befestigungslasche (29) nach Anspruch 1, **dadurch gekennzeichnet, dass** die Trägerplatte (9) eine starre Platte ist.

3. Ferngesteuerter Objektfreigabemechanismus mit einer Befestigungslasche (29) nach den Ansprüchen 1-2, **dadurch gekennzeichnet, dass** das Elektromagnetschlaggegenstücks (3) und das Trägerplattenmagnetgegenstück (4) einen formschlüssigen Deckel (8) aufweisen.

4. Ferngesteuerter Objektfreigabemechanismus mit einer Befestigungslasche (29) nach Anspruch 3, **dadurch gekennzeichnet, dass** der formschlüssige Deckel (8) mit dem Befestigungsband (5) durch Nähen verbunden ist

5. Ferngesteuerter Objektfreigabemechanismus mit einer Befestigungslasche (29) nach Ansprüchen 3-4, **dadurch gekennzeichnet, dass** der formschlüssige Deckel (8) eine Öffnungslasche (13) hat.

6. Ferngesteuerter Objektfreigabemechanismus mit einer Befestigungslasche (29) nach Ansprüchen 1-5, **dadurch gekennzeichnet, dass** mindestens ein Elektromagnetkantenstreifen (14) und/oder ein Festmagnetkantenstreifen (15) von der Trägerplatte (9) in Richtung des Zielobjektauflagebereichs (16) herausragt.

7. Ferngesteuerter Objektfreigabemechanismus mit einer Befestigungslasche (29) nach Anspruch 6, **dadurch gekennzeichnet, dass** der Elektromagnetkantenstreifen (14) das Elektromagnetschlaggegenstück (3) zumindest teilweise umgibt.

8. Ferngesteuerter Objektfreigabemechanismus mit einer Befestigungslasche (29) nach Ansprüche 6-7, **dadurch gekennzeichnet, dass** der Festmagnetkantenstreifen (15) das Trägerplattenmagnetgegenstück (4) zumindest teilweise umgibt.

9. Ferngesteuerter Objektfreigabemechanismus mit einer Befestigungslasche (29) nach Ansprüchen 1-8, **dadurch gekennzeichnet, dass** sich Trägerplattenbefestigungsöffnungen (10) in den herausragenden Teilen der Trägerplatte (10.a) befinden.

10. Ferngesteuerter Objektfreigabemechanismus mit einer Befestigungslasche (29) nach Ansprüchen 1-9, **dadurch gekennzeichnet, dass** das Zielobjekt (6) vorzugsweise eine walzen- oder stabförmige flexible Vorrichtung ist

11. Ferngesteuerter Objektfreigabemechanismus mit einer Befestigungslasche (29) nach Ansprüchen 1-10, **dadurch gekennzeichnet, dass** dass ein multifunktionaler Schlitz an einer Box (18) mit einem Anschluss zur manuellen Steuerung (25) vorgesehen ist.

12. Ferngesteuerter Objektfreigabemechanismus mit einer Befestigungslasche (29) nach Ansprüche 1-11, **dadurch gekennzeichnet, dass** das Elektromagnetschlaggegenstück (3) vorzugsweise eine geringere Haltekraft und Gewicht als das Trägerplattenmagnetgegenstück (4) hat.

13. Ferngesteuerter Objektfreigabemechanismus mit einer Befestigungslasche (29) nach Anspruch 11, **dadurch gekennzeichnet, dass** auf der Box (18) eine mehrfarbige RGB-LED (23) angeordnet ist.

## Revendications

1. Mécanisme de dégagement de différents objets, télécommandé et mis en oeuvre à l'aide d'une sangle de fixation, aux fins de la fixation et du dégagement d'objets cibles de nature animés et inanimés, contrôlées par interaction électromagnétique, à et depuis des véhicules aériens sans pilote, des points de repères et des vêtements appartenant à d'êtres humains ou à d'autres êtres vivants, **caractérisé en ce que** l'objet cible (6) est fixé à une plaque de support (9) sur une zone de repos (16) limitée par un électroaimant (1) fixé à la plaque de support (9) et un aimant fixe de plaque de support (2) fixé à la plaque de support (9), recouverte au moins en partie sur la zone de repos de l'objet cible (16) par une sangle de fixation élastique (5) connectant une contre-pièce de battement de l'électroaimant (3) qui se connecte à l'électroaimant (1) et une contre-pièce d'aimant de la plaque de support (4) reliée à l'aimant fixe de plaque de support (2), en outre la route de la contre-pièce de battement de l'électro-aimant (3) est barrée, au moment du dégagement de l'objet-cible (6), par la bande de fixation (5), de telle sorte que la contre-pièce de battement de l'électro-aimant (3) se referme sur la contre-pièce d'aimant de la plaque de support (4).

2. Mécanisme de dégagement télécommandé à l'aide d'une sangle de fixation (29) selon la revendication 1, **caractérisé en ce que** la plaque de support (9) est une plaque rigide.

3. Mécanisme de dégagement télécommandé à l'aide d'une sangle de fixation (29) selon les revendications 1 et 2, **caractérisé en ce que** la contre-pièce de battement de l'électroaimant (3) et la contre-pièce de la plaque de support (4) ont un couvercle de forme ajustée (8).

4. Mécanisme de dégagement télécommandé à l'aide d'une sangle de fixation (29) selon la revendication 3, **caractérisé en ce que** le couvercle de forme ajustée (8) est cousu à la sangle de fixation (5).

5. Mécanisme de dégagement télécommandé à l'aide d'une sangle de fixation (29) selon les revendications 3-4, **caractérisé en ce que** le couvercle de forme ajustée (8) est pourvu d'une patte d'ouverture (13).

6. Mécanisme de dégagement télécommandé à l'aide d'une sangle de fixation (29) selon les revendications 1 à 5, **caractérisé en ce qu'**au moins une bande de bordure de l'électroaimant (14) et/ou une bande de bordure de l'aimant fixe (15) dépassent, dans le sens de la zone de repos de l'objet cible (16), le bord de la plaque de support (9).

7. Mécanisme de dégagement télécommandé à l'aide d'une sangle de fixation (29) selon la revendication 6, **caractérisé en ce que** la bande de bordure de l'électroaimant (14) entoure au moins partiellement la contre-pièce de battement de l'électroaimant (3).

8. Mécanisme de dégagement de différents objets, télécommandé et mis en oeuvre à l'aide d'une sangle de fixation (29) selon les revendications 6-7, **caractérisé en ce que** la bande de bordure de l'aimant fixe (15) entoure au moins partiellement la contre-pièce d'aimant de la plaque de support (4).

9. Mécanisme de dégagement télécommandé à l'aide d'une sangle de fixation (29) selon les revendications 1 à 8, **caractérisé en ce qu'**il y a des ouvertures de montage de la plaque de support (10) dans des parties dépassant le bord de la plaque de support (10.a).

10. Mécanisme de dégagement télécommandé à l'aide d'une sangle de fixation (29) selon les revendications 1 à 9, **caractérisé en ce que** l'objet cible (6) est de préférence un dispositif flexible en forme de fût ou de bâtonnet.

11. Mécanisme de dégagement télécommandé à l'aide d'une sangle de fixation (29) selon les revendications 1-10, **caractérisé en ce qu'**il y a là une ouverture multi-fonctionnelle pratiquée sur une boîte (18), connectée aux fins d'une commande manuelle (25).

12. Mécanisme de dégagement télécommandé à l'aide d'une bande de fixation (29) selon les revendications 1-11, **caractérisé en ce que** la contre-pièce de battement de l'électroaimant (3) a de préférence une force et un poids de retenue inférieurs à ceux de la contre-pièce d'aimant de la plaque de support. (4).

13. Mécanisme de dégagement télécommandé à l'aide d'une sangle de fixation (29) selon la revendication 11, **caractérisé en ce qu'**il y a une LED RGB multicolore (23) sur la boîte (18).
